# EUROPEAN PATENT APPLICATION

(11) **EP 1 736 406 A1**
(43) Date of publication of application: **27.12.2006**
(21) Application number: 05013401.4
(22) Date of filing: 22.06.2005
(51) Int. Cl.: B64D 27/24

(54) **Airplane with an electric drive**

(71) Applicant: Makarov, Vladimir, 664009 Irkutsk City (RU); Demin, Konstantin, 115487 Moscow (RU)
(72) Inventor: Makarov, Vladimir, 664009 Irkutsk City (RU); Demin, Konstantin, 115487 Moscow (RU)
(74) Representative: Balsters, Robert

(57) **Abstract**

The airplane with electric drive has very high operation qualities, and may be used for civil, military and other purposes. The reason of its advantages is that its constructional elements (3,4,5) also constitute the source of electric power.

## Description

The invention concerns the area of aircraft construction and can be used for the construction of pilot- and pilot-less flying devices with an electric drive as a power engine, which are heavier than air, such as solar-powered airplanes.

An airplane with an electric drive (see patent USA Nº US 6045089 from 2000-04-04 IPC B64 C 15/00, B64 D 27/24) includes a fuselage, a chassis, electro-engines, propellers, devices of management, a disk collecting a solar energy by photo-converters panels for the accumulated reflection of the sun energy with help of mirrors established on system of satellites on Earth. However, the realization of such a device requires huge expenses for the creation of a system of satellites and for maintaining it in its operation condition.

An airplane with an electric drive is known also from the patent USA No US 4415133 1983-11-15 IPC B 64 D 27/02, and includes two perpendicular wings (a cruciform wing structure), covered with solar photo cells, connected with the help of stringers for rigidity and a fuselage with the engine, situated at the joint of these wings. The use of such design is possible by the calculation of changes within a day of the angle of impact of sunlight. The inconvenience of such plane is complexity of piloting and impossibility of a normal landing.

An airplane with an electric drive is known, using energy of solar batteries (see the patent of Japan JP 10119896 from 1998-05-12 IPC B 64 D 27/24, B 64 C 39/00) which cover the surface of wings and the fuselage. The inconvenience is an insufficient power supply causing the plane not being capable of independent take off and needing to be towed by a vehicle till the moment of rise.

A plane that includes an electric drive, a fuselage with useful loading, a wing, a chassis, an electric motor with a battery, a flexible covering with photo-converters for transformation of solar energy (the patent USA Nº US 4768738 from 1988-09-06 IPC B 64 C 25/10, B 64 D 27/24), is acknowledged by the present inventors as a prior art prototype.

This plane has a low level of available power because photo-converters for sun energy transformation usually have low efficiency, in ranges of 10-20 %. And for the actual flight, with high operational requirements, big areas of photo-converters are needed. This leads to the increase of the size of the plane and needs an increase of engine capacity. The purpose of the present invention is to increase the operational qualities of the plane with an electric drive.

The purpose is reached by that the configuration items of an airplane and parts of them are produced simultaneously as sources of an electric current and as load-bearing elements, accepting loads assayed by a design of an airplane.

As opposed to the prototype the present invention comprises three sources of electrical energy: a battery, solar photo converters and constructional elements of an airplane, providing an electric current.

Therefore, the proposed engineering solution of the present invention corresponds to the criterion "novelly".

Electrically-driven airplanes have electrical batteries, such as for example, the above-mentioned prototype. However, in the known solutions, the electrical batteries execute only functions of energy source and not any other.

In the proposed solution, the electrical batteries are a source of electric power and simultaneously arc part of members and structural assemblies which support power loads and that execute technical functions, whihc is missing in prior art devices such as the prototype.

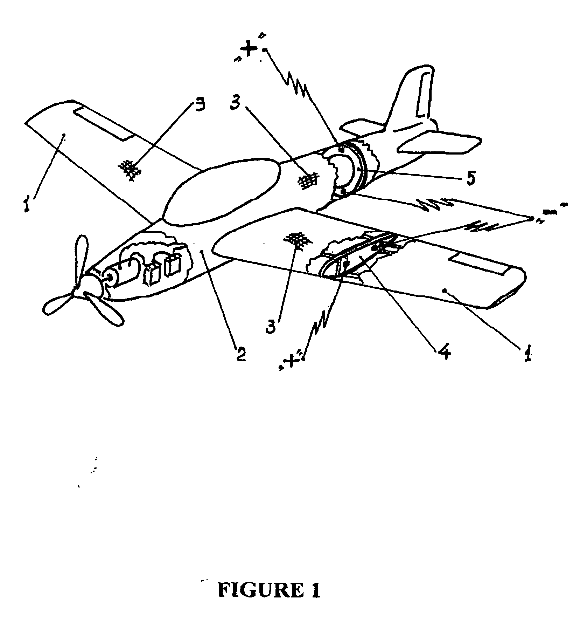

Therefore, the proposed engineering solution of our invention corresponds to the criterion "essential differences ". The present invention is illustrated by a figure 1 showing:
1 - wing, 2 - fuselage with a paying load, 3 - photoelectric coating of a wing and fuselage, 4 - web rib of a wing, as the load-bearing element and simultaneously being an electrical battery, 5 - walls of a frame of a fuselage, as a load-bearing element and the electrical battery.

Thus, by the way of overlapping of functions of energy source and working load-bearing element of a construction, the electric drive airplane's ratio of power saturation increases, tgus providing higher operational quality of the airplane.

The capability of manufacturing load-bearing elements of a construction of an airplane that are simultaneously sources, for example, of electrochemical energy, is conditioned by the existence of high-strength, alkali- and acid-resistant plastic weights and composite materials.

The application of the present invention provides in contrast to existing types of electrically-driven airplanes higher level of ratio of power saturation, and consequently higher aircraft characteristics.

## Claims

1. Airplane with electric drive which includes a fuselage with useful loading, a wing, a chassis, an electric motor with battery, a flexible covering with photo-converters for transformation of solar energy into electric power **characterised by** the fact that the sources of electric power of the airplane construction are integrated with and constitute the constructional elements of the airplane.
